(19) Europäisches Patentamt
European Patent Office
Office européen des brevets

(11) Publication number: **0 338 585 B1**

(12) **EUROPEAN PATENT SPECIFICATION**

(45) Date of publication of patent specification: **15.06.94**

(51) Int. Cl.5: **C08G 73/00**, C08G 65/00

(21) Application number: **89107255.5**

(22) Date of filing: **21.04.89**

(54) **Polyperfluoroaminoethers.**

(30) Priority: **22.04.88 IT 2029088**

(43) Date of publication of application:
**25.10.89 Bulletin 89/43**

(45) Publication of the grant of the patent:
**15.06.94 Bulletin 94/24**

(84) Designated Contracting States:
**DE FR GB IT NL**

(56) References cited:
**EP-A- 0 121 898**

**Journal of Organic Chemistry vol. 51, 1986, pages 4466 - 4470; "Cycloadditionand Oxygen-Transfer Reactions of 2-(trifluoromethyl)-3,3-difluorooxaziridine"**

**Tetrahedron Letters vol. 22, 1981, Pergamon Press, GB pages 917 - 920;"Epoxidation of olefins by oxaziridines"**

(73) Proprietor: **AUSIMONT S.p.A.**
**31, Foro Buonaparte**
**I-20100 Milano(IT)**

(72) Inventor: **Navarrini, Walter, Dr.**
**46/48 Via A. Moro**
**I-20010 Boffalora S.T. Milan(IT)**
Inventor: **Desmarteau, Darryl D., Dr.**
**1007 Berkeley Drive**
**Clemson South Carolina 29631(US)**

(74) Representative: **Barz, Peter, Dr. et al**
**Patentanwälte Dipl.-Ing. G. Dannenberg**
**Dr. P. Weinhold, Dr. D. Gudel**
**Dipl.-Ing. S. Schubert, Dr. P. Barz**
**Siegfriedstrasse 8**
**D-80803 München (DE)**

**EP 0 338 585 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to perfluoroaminoether polymers and to a process for preparing them. In particular, there are described new perfluoroaminoether polymers which are obtainable by copolymerization of fluorinated olefins with oxaziridines, in particular in the presence of ultra-violet radiation or chemical initiators.

The new perfluoroaminoether polymers of the present invention contain the perfluoroalkylamine units statistically distributed along the polymer chain.

Tertiary amines containing in their chain perfluoroalkyl groups linked by ether oxygen atoms are known.

For example, US-A-3,882,178 relates to fluorinated tertiary amines containing ether bonds, prepared by reacting non-fluorinated amino alcohols with tetrafluoroethylene and subsequent electrochemical fluorination. In this case, however, the amine groups are present only as polymer end groups.

US-A-3,997,607 teaches how to prepare perfluoro aminoethers by electrochemical fluorination of the reaction product of a tertiary amine having hydroxyethyl groups with hexafluoropropene.

EP-A-214 852 discloses perfluoroaminoethers characterized by 2 or 3 tertiary amine atoms as end groups, linked to perfluoropolyether units of type $-C_2F_4-O-C_2F_4$ or of formula

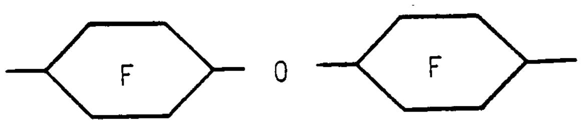 ,

said products being obtained by electrochemical fluorination of the corresponding partially hydrogenated precursors.

However, also these products possess the N-containing units as end groups, as mentioned above with reference to US-A-3,888,178.

The products of the present invention cannot be considered to be perfluoroethers having perfluoroalkylamine groups as end groups, but are polymers characterized by units randomly distributed in the chain, such as, for example:

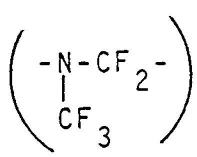 ; $(-OCF_2-CF_2)$ ; $(-CF_2-CF_2-)$.

Furthermore, the process for preparing the polymers of the present invention does not involve the electrochemical fluorination of hydrogenated compounds, but the reaction of perfluoroolefins with perfluorooxaziridines in the presence of ultraviolet radiation or, as an alternative, in the presence of suitable chemical initiators or starter compounds acting as catalyst, such compounds being selected from peroxy compounds and compounds generating perfluoroalkyl radicals.

US-A-4,287,128 describes the preparation of oxaziridines of formula:

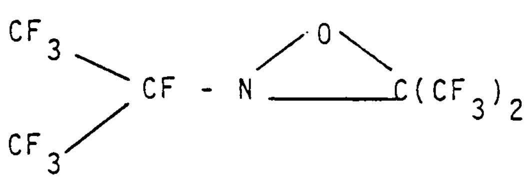

and generally discusses the possibility of polymerizing these compounds without giving, however, any specific indication as to the polymerization or copolymerization of the oxaziridines.

The article by B.O.Brien, W.Lam and D.D.Desmarteau in J.Org. Chem. vol. 51, No. 3, 1986, relates to an exhaustive study on the reactivity of the oxaziridine of formula

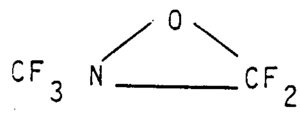

towards various 1,1-difluoroolefins.

According to the results of said study, the above oxaziridine does not polymerize, but provides cycloaddition products with most of the 1,1-difluoroolefins under formation of perhalo-1,3-oxazolidines.

For example, by means of an 18-hour heat-treatment at 55° to 100°C it is possible to obtain,with a satisfactory yield (60%), from an equimolecular amount of $CF_2 = CF_2$ and oxaziridines of formula:

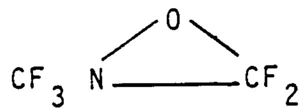

a cyclic product, i.e. perfluoro-3-methyloxazolidine, with not even traces of oil, i.e of polymer. Conversely, the reaction of
$CF_3$ CF = $CF_2$ with

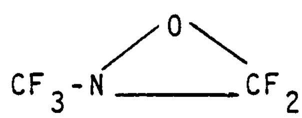

at 150°C for 18 hours does not provide traces of oxazolidine and results in the formation of a non-volatile oil.

Thus, polymers obtained from oxaziridines are not described or even suggested in the prior art.

It has surprisingly been found that it is possible to prepare polymers with perfluorinated olefins if a specific process is utilized, in particular if the polymerization reaction is conducted for suitable periods of time in the presence of UV radiation, having a wavelength of from 200 nm to 600 nm, or, as an alternative, in the presence of suitable starters selected from peroxy compounds and perfluoroalkyl radical generators or precursors.

Thus, an object of the present invention are perfluoroaminoethers having the following general formula:

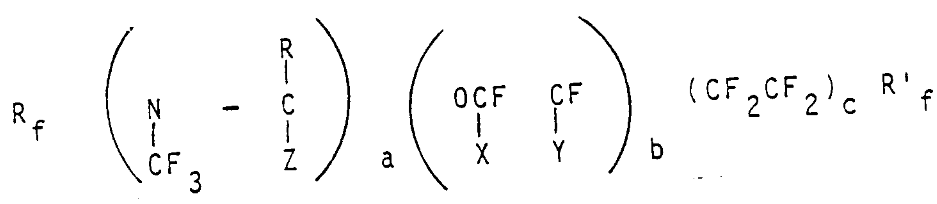

wherein
$R_f$ and $R'_f$, the same or different from each other, represent: $-O-CF_3$;

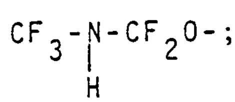

$-CF_2-COF$; $-COCF_3$;

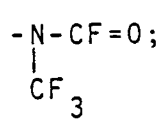

$-CF_2-N=CF_2$; $-CF=N-CF_3$;

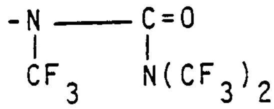 ; 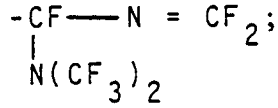

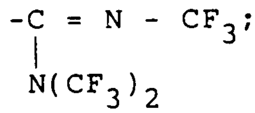

or $C_1$-$C_6$, particularly $C_{1-3}$,perfluoroalkyl radicals;
a, b are integers and c is an integer or zero;

$a+b+c \geqq 2$;
$\frac{a}{b} = 1$;
$c \geqq 0$;

the above units are the same or different from each other and are statistically distributed along the polymer chain;
Z represents F or

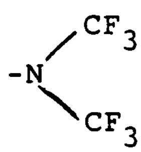

or a $C_{1-10}$-,particularly a $C_{1-5}$-perfluoroalkyl group;
R represents F or a $C_{1-10}$-, particularly a $C_{1-5}$-perfluoroalkyl group, the same or different from Z; X and Y are defined as follows:
a) if at least one of R and Z is different form F, X and Y represent F and $CF_3$, so that if Y = F X is $CF_3$ and vice versa,and c = 0, or X and Y both are F;
b) if R = Z = F, Y represents F and X represents a $C_{1-5}$-perfluoroalkyl group and vice versa and c = 0, or X and Y both are F.

When relatively low molecular weight polymers are obtained, e.g. ones having an average molecular weight of from about 450 to about 20,000, and, in particular, from about 600 to about 5000, the following approximate relationships are valid:

$2 \leqq a+b+c \leqq 200$

$$1 \leqslant \frac{b+c}{a} \leqslant 50$$

$0 \leqq c \leqq 100$.

In the case of polymers having higher molecular weights the following approximate relationships are valid: c > a and, e.g.

$$50 \leqslant \frac{b+c}{a} \leqslant 100;$$

with a ΔH crystallization factor of from about 5 to about 70 J/g.

The perfluoroaminoethers of the present invention may be prepared by reaction of oxaziridines of formula (I):

(I) 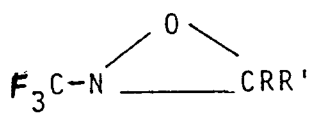

wherein each group R, the same or different from each other, represents F or a perfluoroalkyl group having from 1 to 10, particularly from 1 to 5 carbon atoms and R' is F or the group

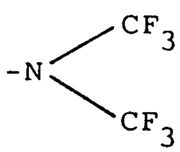

or a perfluoroalkyl group having from 1 to 10, particularly 1 to 5 carbon atoms, with a perfluoroolefin selected from perfluoropropene and perfluoroethylene, at temperatures ranging from -80 °C to 120 °C in the presence of ultra-violet radiation of a wavelength of from 200 to 600 nm. Preferably, the temperature ranges from -50° to +50 °C.

A particularly preferred meaning for the group CRR' in formula (I) above is CFR'.

Among the oxaziridines described, particularly preferred are 2-(trifluoromethyl)-3,3-difluoro-oxaziridine (II):

(II) 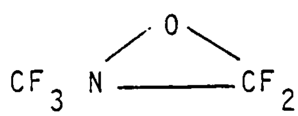

and 2-(trifluoromethyl)-3-(N,N-bis-trifluoromethylamino)-3-fluoro-oxaziridine (III):

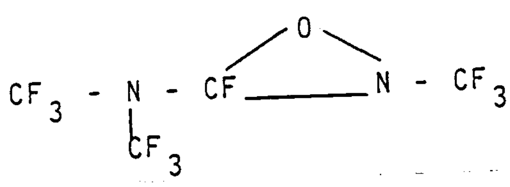 (III)

The oxaziridines employed as starting materials of the present invention are known compounds and are preparable according to the methods described in the already cited US-A- 4,287,128 or by Falardeau,Desmarteau,J. Am. Chem. Soc. 1976, 98, 3529 or in IT-A-22,576 A/87 in the name of the applicant.

As it is known, the reaction time is a function of the other reaction parameters and generally ranges from about 1 to 24 hours.

As already mentioned, in order to effect the polymerization which is the object of this invention, it is necessary to have a combination of the above values for temperature and UV radiation.

A further object of the present invention is an alternative process for preparing the above perfluoroaminoethers which comprises a thermal treatment of said perfluoroolefins at a temperature of from 0° to 200 °C in the presence of catalytic amounts of a chemical starter or initiator selected from peroxy compounds and perfluoroalkyl radical generators.

Such chemical starters or initiators must be able to initiate the polymerization of the perfluoroethylene by giving rise to free radicals (peroxy compounds) or by decomposition, at the reaction temperature, in perfluoroalkyl radicals (perfluoroalkyl radical generators).

The peroxy compunds used in the present invention and the teachings useful for their preparation are well known; in particular they are described in the already cited publication by Falardeau, Desmarteau J. Am. Chem. Soc. 1976, 98, 3529.

For example, it is possible to use peroxides such as $CF_3$-NH-$CF_2$-O-$OCF_3$.

The perfluoroalkyl radical generators, used according to the present invention, are per se known compounds. They are described, for instance, in EP-A-121898 and in IT-A-20061 A/87.

While there is no critical limit as to the composition of the generated perfluorinated radicals, radicals containing up to 6 carbon atoms have afforded the best results. For example, it is possible to use perfluoroalkyl radical generators such as:

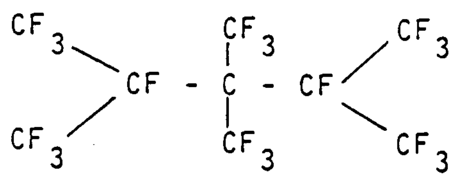

and

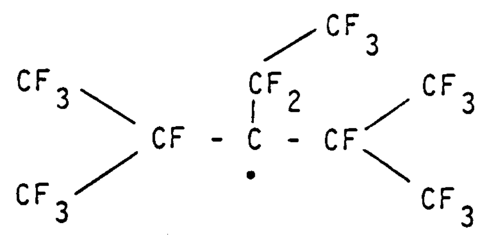

The chemical precursor (peroxy or perfluoroalkyl radical generating compounds) are employed in catalytic amounts, e.g. in amounts of from 0.5% to 5% by weight based on the reaction mixture.

As to reaction pressure, it is possible to operate at atmospheric or higher pressures, if necessary, for example as high as 50 atm.

When the oxaziridine (II) is employed, the perfluoroolefin reactant may be a perfluoroolefin of formula:

$R''FC = CF_2$

wherein R″ is F or a perfluoroalkyl group having 1 to 5, particularly 1 to 3 carbon atoms.

Finally, the above processes can also be carried out by operating in a suitable solvent, e.g. selected from chlorocarbon solvents ($CH_2Cl_2$, $CHCl_3$ etc.).

The perfluoroaminoethers of the present invention exhibit characteristics of high chemical inertia and high thermal stability, which render them particularly useful as lubricating oils, for moulding polymers. In particular, such oils, due to the obtainable low pour point values (ranging from -5 °C to -90 °C) and to the narrow boiling point range, can be utilized also as fluids for vapour or liquid phase heating in the electronic industry.

The following examples are given merely to illustrate but not to limit the present invention.

## Example 1

3 g of oxaziridine (II) (20 mmoles) and 2 g of tetrafluoroethylene (20 mmoles) were placed in a 280 ml glass reactor. The calculated initial total pressure was 3.5 kg/$cm^2$ abs. The reactor thus charged was subjected to ultra-violet radiation for 4 hours, at a temperature of 25 °C , utilizing a Hanau® Lamp TQ, 150W.

From the crude reaction products, after distillation of the most volatile fractions and stripping at 50 °C for 3 hours, there were isolated 2.6 g of an oil, the elemental analysis of which was in accordance both with the suggested structure and with the quantitative analysis of the unreacted gases.

The polymerization yield, defined as the ratio between the amount in grams of polymer obtained and the sum of the amounts in grams of the individual monomers was 52%.

Chemico-physical properties of the product obtained in example 1:

- Average molecular weight: 3100
- Elemental analysis: C = 20%, N = 4.3%, F = 69.8%.
- IR-spectrum - main absorption bands:
  $cm^{-1}$ intensity); 1890 (vw), 1317 (vs), 1260 (s), 1199 (vs), 1085 (vs), 989 (s), 923 (m); wherein vs = very strong, s = strong, m = medium, w = weak, vw = very weak.

- $^{19}$F-NMR-spectrum, main chemical shifts (internal reference $CFCl_3$):

| | |
|---|---|
| Trifluoromethyl groups on nitrogen ($N-CF_3$) | -51.0 ppm |
| Difluoromethylene groups between nitrogen and oxygen ($N-CF_2-O$) | -52.5 ppm |
| Difluoromethylene groups in chain $Cf-(CF_2)_m-Cf$ (Cf being a perfluorinated radical) | -120.0-130.0 ppm |

Example 2 (comparative test)

3 g of oxaziridine (II) (20 mmoles) and 20 g of tetrafluoroethylene (20 mmoles) were placed in a 280 ml glass reactor.

The calculated initial total pressure was 3.5 kg/cm$^2$ abs. The reactor thus charged was heated to 50 °C in the absence of light for 24 hours.
The crude reaction product was distilled at a pressure of $10^{-3}$ torr.
The vapours emerging from the distillation vessel were passed through cooling traps maintained at temperatures of -110 °C and -196 °C, respectively.
In the trap at -110 °C, 15 mmoles of perfluoro-3-trifluoromethyl-oxazolidine, a cyclic dimer of the reagents, were condensed, and in the trap at -196 °C, 10 mmoles of an equimolecular mixture of unreacted tetrafluoroethylene and oxaziridine (I) were condensed. Conversely, polymers or oils were completely absent.

Example 3

1.5 g of oxaziridine (II) (10 mmoles) and 1 g of tetrafluoroethylene (10 mmoles) were placed in a 140 ml quartz reactor.

The calculated total pressure was 3.5 kg/cm$^2$ abs.
As in example 1, the reactor thus charged was subjected to ultraviolet light for 4 hours at a temperature of -10 °C.
From the crude product, after distillation of the most volatile fractions and stripping at 50 °C for 3 hours, there were isolated 1.2 g of a perfluorinated oil having the following elemental analysis:
C = 20.0%; N = 4.7%; F = 68.9%.
The polymerization yield, defined as in example 1, was equal to 48%.

Example 4 (comparative test)

3 g of oxaziridine (II) (20 mmoles) and 3 g of perfluoropropene (20 mmoles) were placed in a 280 ml glass reactor.

The calculated initial total pressure was 3.5 kg/cm$^2$ abs. The reactor thus charged was heated to 150 °C for 24 hours in the absence of light.
The crude reaction product was distilled at a pressure of $10^{-3}$ torr.
The vapours emerging from the distillation vessel were passed through cooling traps maintained at temperatures of -110 °C and -196 °C, respectively.
In the trap at -110 °C, 16 mmoles of 3,4-di(trifluoromethyl)perfluorooxazolidinewere condensed. In the trap at -196 °C, 5 mmoles of a gas mixture, the main components of which were the reactive gases, were condensed.
Among the reaction products no polymers or oils could be detected.

Example 5

1.5 g of oxaziridine (II) (10 mmoles), 1 g of perfluoropropene (10 mmoles) and 15 mg of the perfluorinated peroxide $CF_3-N(H)CF_2O-O-CF_3$ were placed into a 140 ml glass reactor.

The calculated total pressure was equal to 3.5 kg/cm$^2$ abs. The reactor thus charged was heated to 100 °C for 24 hours in the absence of light.
From the crude product, after distillation of the most volatile fractions and stripping at 50 °C for 3 hours, there were isolated 1.3 g of a perfluorinated will the elemental analysis of which was in accordance with both the suggested structure and the quantitative analysis of the unreacted gases.

The polymerization yield, defined as the ratio between the amount in grams of polymer obtained and the sum of the amounts in grams of the individual monomers, was 43%.

Chemico-physical characteristics of the product obtained in example 5:

- Average molecular weight: 1950.
- Elemental analysis: C = 20%; N = 4.1%; F =69%.
- Infrared spectrum - main absorption bands: cm$^{-1}$ intensity); 1892 (vw), 1311 (vs), 1225 (vs), 1192 (vs), 1149 (s), 1085 (s), 995 (m), 979 (s); wherein vs = very strong, s = strong, m = medium, w = weak, vw = very weak.
- $^{19}F$-NMR spectrum main chemical shifts (internal reference $CFCl_3$):

| | |
|---|---|
| Trifluoromethyl groups on nitrogen ($N-CF_3$) | - 52 ppm |
| Difluoromethylene groups between nitrogen | |
| and oxygen ($N-CF_2-O$) | - 46/- 56 ppm |
| Trifluoromethyl groups on carbon ($-CF(CF_3)-$) | |
| Difluoromethylene groups on nitrogen or | - 78/- 80 ppm |
| oxygen ($CF_2-N$, $-CF_2-O$) | - 80/- 95 ppm |
| Monofluoromethine groups ($-\overset{\vert}{\underset{\underset{F}{\vert}}{C}}-$) | -139/-150 ppm |

Example 6

1.5 g of oxaziridine (II) (10 mmoles), 1.5 g of perfluoropropene (10 mmoles) and 15 mg of a perfluorinated peroxide having a low decomposition temperature, ($CF_3-N(H)-CF_2-OO-CF_3$) were placed in a steel reactor having a volume of 14.3 ml.

The calculated total pressure, at 100 °C, was 43 kg/cm$^2$ abs. The reactor thus charged was heated to 100 °C for 24 hours in the absence of light.
From the crude reaction product, after distillation of the most volatile fractions and stripping at 50 °C for 3 hours, there were isolated 1.9 g of perfluorinated oil, having the same characteristics as the product of example 5, with the exception of the molecular weight, which was 2250. The polymerization yield, defined as in example 1, was 63%.

Example 7

0.71 g of oxaziridine (III) (2.5 mmoles), 0.25 g of tetrafluoroethylene (2.5 mmoles), 3 ml of $CFCl_3$ as solvent were placed in a 30 ml quartz reactor whereafter the mixture was irradiated for 5 hours at 0 °C, utilizing a Hanau® Lamp TQ, 150 W.

From the crude reaction mixture, after distillation of the most volatile products and stripping at 70 °C for 3 hours,there were isolated 0.19 g of a white solid polymer.
Polymerization yield: 19.8%.
Elemental analysis: C = 23.7%; N = 0.23%; F = 71.8%.
Infrared spectrum - main absorption bands:
cm$^{-1}$ intensity); 2361 (w), 1634 (w), 1238 (vs), 1156 (vs), 986 (w, stretching $CF_3$-N), 505 (s); vs = very strong, s = strong, w = weak.

Example 8

1 g of oxaziridine (III) (3.5 mmoles), 0.35 g of tetrafluoroethylene (3.5 mmoles) and 0.35 mmoles of

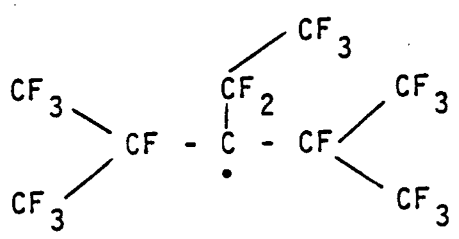

as initiator were placed in a 30 ml glass reactor.
The reactor thus charged was heated to 45 °C for 19 hours, then to 55 °C for 8 hours.
From the crude mixture, after distillation of volatile fractions and stripping at 70 °C for 3 hours, there were collected 0.42 g of a white solid polymer.
Polymerization yield: 31.1%
Elemental analysis: C = 23.5%; N = 1.05%; F = 71.4%.
Infrared spectrum - main absorption bands:
$cm^{-1}$ (intensity), 2361 (w), 1634 (w), 1238 (vs), 1136 (vs), 986 (m, stretching $CF_3$-N), 505 (s); vs = very strong, s = strong, w = weak.

Example 9

Following the experimental procedure of example 8, 1.3 g of oxaziridine (III) (4.6 mmoles, 0.23 g of tetrafluoroethylene (2.3 mmoles) and 0.35 mmoles of

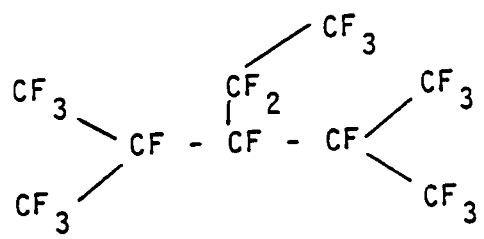

as initiator were placed in the reactor of example 8.
There were isolated 0.23 g of a white solid polymer.
Polymerization yield: 15.0%.
Elemental analysis: C = 23.3%; N = 2.6%; F = 70.0%.
The infrared spectrum showed the same pattern as described in example 8.

Example 10

0.450 g of oxaziridine (III) (1.6 mmols), 0.400 g of tetrafluoroethylene and 15 mg of a perfluoroalkane having formula

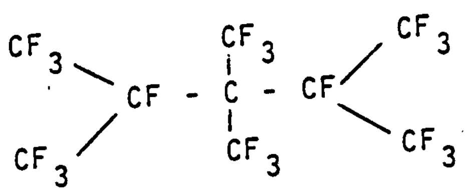

as initiator were placed in a 10 ml steel reactor.

The calculated total pressure at 110 °C was 18 kg/$cm^2$ abs. The reactor thus charged was heated to 110 °C for 24 hours in the absence of light.
From the crude reaction product, after distillation of the most volatile fractions and stripping at 70 °C for 3 hours, there were isolated 0.250 g of a white solid polymer having the following elemental analysis:
C = 24.26%; N = 0.34%; F = 71.9%.
The polymerization yield,defined as in example 1, was 29%. The infrared spectra showed the same pattern as in example 7.

## Claims

**1.** Perfluoroaminoethers of general formula:

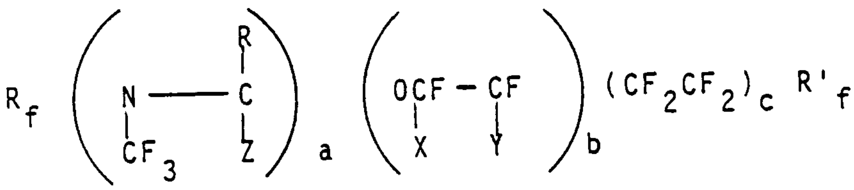

wherein
$R_f$ and $R'_f$, the same or different from each other, are selected from:
$-O-CF_3$,

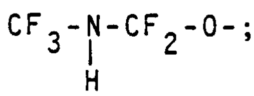

$-CF_2COF$; $-COCF_3$;

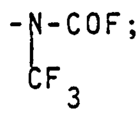

$-CF_2-N=CF_2$; $-CF=N-CF_3$;

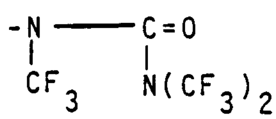

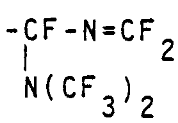 ; 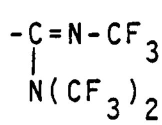 ;

$C_1-C_6$ perfluoroalkyl groups; a, b are integers and c is an integer or zero;

$a+b+c \geqq 2$;
$\frac{a}{b} = 1$;

the units in brackets are statistically distributed along the polymer chain;
Z represents F or

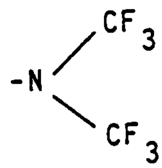

or a $C_1$-$C_{10}$ perfluoroalkyl group;
R represents F or a $C_{1-10}$ perfluoroalkyl group, the same as or different from Z;
X and Y are defined as follows:

a) if one or both of R and Z are different from F, X and Y represent F and $CF_3$, so that for X = F Y is $CF_3$ and vice versa, and c = 0, or X and Y both are F;

b) if R = Z = F, X represents F and Y represents a $C_{1-5}$ perfluoroalkyl group and vice versa, and c = 0, or X and Y are both F.

**2.** Process for preparing the perfluoroaminoethers of claim 1, which comprises reacting at least one oxaziridine of formula (I):

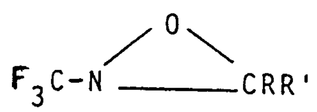 (I)

wherein R represents F or a perfluoroalkyl group having 1 to 10 carbon atoms and R' is F or the group

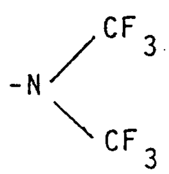

or a perfluoroalkyl group having from 1 to 10 carbon atoms, with at least one perfluoroolefin of general formula R"FC = $CF_2$, wherein R" is F or a $C_{1-5}$ perfluoroalkyl group (for R = R' = F) or with $CF_2$ = $CF_2$ and/or $CF_3CF$ = $CF_2$, at temperatures ranging from -80 °C to 120 °C in the presence of UV radiation having a wavelength of from 200 to 600 nm.

**3.** Process according to claim 2, wherein the temperature ranges from -50 °C to +50 °C.

**4.** Process for preparing the perfluoroaminoethers of claim 1, which comprises reacting at least one oxaziridine of formula (I):

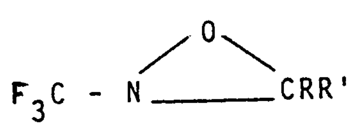 (I)

wherein R and R' have the meanings given in claim 2, with at least one perfluoroolefin of general formula R"FC = $CF_2$ wherein R" is F or a $C_{1-5}$ perfluoroalkyl group (for R = R' = F) or with $CF_2$ = $CF_2$ and/or $CF_3CF$ = $CF_2$, at temperatures ranging from 0 °C to 200 °C in the presence of catalytic amounts of a chemical initiator selected from peroxy compounds and compounds generating perfluoroalkyl radicals.

**5.** Process according to any one of claims 2 to 4, wherein the oxaziridine is selected from 2-(trifluoromethyl)-3,3-difluoro-oxaziridine and 2-(trifluoromethyl)-3-(N,N-bis-trifluromethylamino)-3-fluoro-oxaziridine.

**6.** Process according to claim 4 or 5, wherein the peroxy compound is

$CF_3$ - N(H) $CF_2O$-O-$CF_3$.

**7.** Process according to claim 4 or 5, wherein the generated perfluoroalkyl radical contains up to 6 carbon atoms.

**8.** Process according to claim 7, wherein the compound generating perfluoroalkyl radicals is selected from

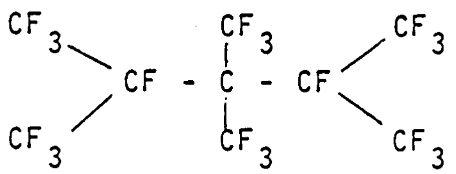

and

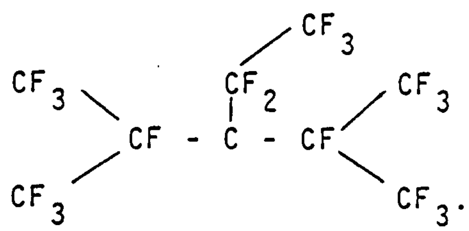

**9.** Process according to any one of claims 4 to 8, wherein the peroxy compound or the compound generating perfluoroalkyl radicals is employed in amounts of from 0.5% to 5% by weight based on the reaction mixture.

**Patentansprüche**

**1.** Perfluoraminoether der allgemeinen Formel:

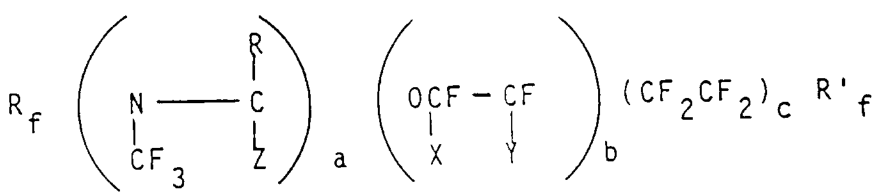

worin
$R_f$ und $R'_f$, gleich oder verschieden voneinander, ausgewählt sind aus: -O-$CF_3$;

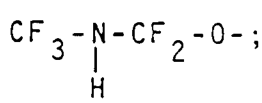

-$CF_2$COF; -$COCF_3$;

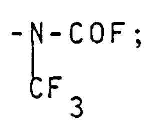

-$CF_2$-N = $CF_2$; -CF = N-$CF_3$;

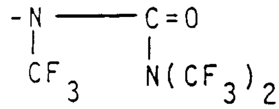 ;

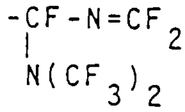 ; 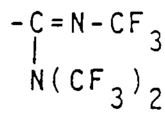 ;

$C_1$-$C_6$-Perfluoralkylgruppen;
a, b ganze Zahlen sind und c eine ganze Zahl oder null ist;

$a + b + c \geqq 2$;
$a/b = 1$;

die Einheiten in Klammern statistisch entlang der Polymerkette verteilt sind;
Z für F oder

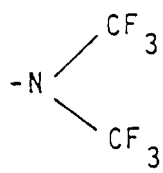

oder eine $C_1$-$C_{10}$-Perfluoralkylgruppe steht;
R für F oder eine $C_{1-10}$-Perfluoralkylgruppe steht, gleich oder verschieden von Z;
X und Y wie folgt definiert sind:

a) falls eines oder beide von R und Z von F verschieden sind, stehen X und Y für F und $CF_3$, so daß für X = F Y gleich $CF_3$ ist und umgekehrt, und c = 0, oder X und Y sind beide F;

b) falls R = Z = F steht X für F und Y stellt eine $C_{1-5}$-Perfluoralkylgruppe dar und umgekehrt, und c = 0, oder X und Y sind beide F.

**2.** Verfahren zur Herstellung der Perfluoraminoether von Anspruch 1, welches umfaßt die Umsetzung mindestens eines Oxaziridins der Formel (I):

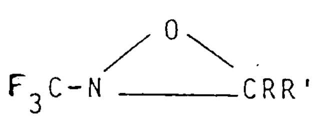 (I)

worin R für F oder eine Perfluoralkylgruppe mit 1 bis 10 Kohlenstoffatomen steht und R' F oder die Gruppe

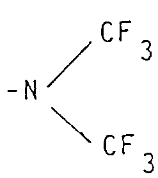

oder eine Perfluoralkylgruppe mit 1 bis 10 Kohlenstoffatomen darstellt, mit mindestens einem Perfluorolefin der allgemeinen Formel R''FC = $CF_2$, worin R'' für F oder eine $C_{1-5}$-Perfluoralkylgruppe steht (für R = R' = F), oder mit $CF_2=CF_2$ und/oder $CF_3CF=CF_2$, bei Temperaturen im Bereich von -80 °C bis

120 °C in Anwesenheit von UV-Strahlung mit einer Wellenlänge von 200 bis 600 nm.

3. Verfahren nach Anspruch 2, in welchem die Temperatur im Bereich von -50 °C bis +50 °C liegt.

4. Verfahren zur Herstellung der Perfluoraminoether von Anspruch 1, welches umfaßt die Umsetzung mindestens eines Oxaziridins der Formel (I):

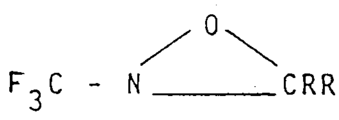 (I)

worin R und R' die in Anspruch 2 angegebenen Bedeutungen aufweisen, mit mindestens einem Perfluorolefin der allgemeinen Formel $R''FC=CF_2$, worin R'' für F oder eine $C_{1-5}$-Perfluoralkylgruppe steht (für R = R' = F), oder mit $CF_2=CF_2$ und/oder $CF_3CF=CF_2$, bei Temperaturen im Bereich von 0 °C bis 200 °C in der Anwesenheit von katalytischen Mengen eines aus Peroxy-Verbindungen und Perfluoralkyl-Radikale erzeugenden Verbindungen ausgewählten chemischen Initiators.

5. Verfahren nach irgendeinem der Ansprüche 2 bis 4, in welchem das Oxaziridin ausgewählt ist aus 2-(Trifluormethyl)-3,3-difluoroxaziridin und 2-(Trifluormethyl)-3-(N,N-bis-trifluormethylamino)-3-fluoroxaziridin.

6. Verfahren nach Anspruch 4 oder 5, in welchem die Peroxy-Verbindung $CF_3$-N(H)$CF_2$O-O-$CF_3$ ist.

7. Verfahren nach Anspruch 4 oder 5, in welchem das erzeugte Perfluoralkyl-Radikal bis zu 6 Kohlenstoffatome enthält.

8. Verfahren nach Anspruch 7, in welchem die Perfluoralkyl-Radikale erzeugende Verbindung ausgewählt ist aus

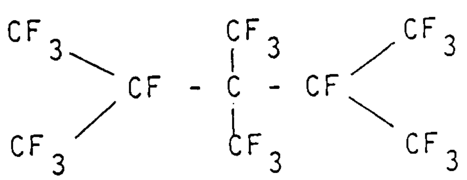 und 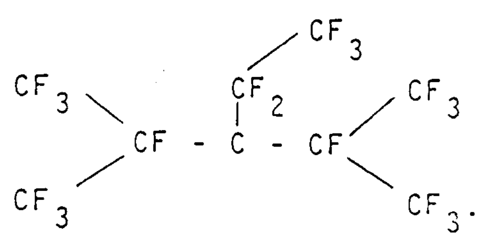.

9. Verfahren nach irgendeinem der Ansprüche 4 bis 8, in welchem die Peroxy-Verbindung oder die Perfluoralkyl-Radikale erzeugende Verbindung in Mengen von 0,5 bis 5 Gewichtsprozent, bezogen auf die Reaktionsmischung, eingesetzt wird.

## Revendications

1. Perfluoroaminoéthers de formule générale:

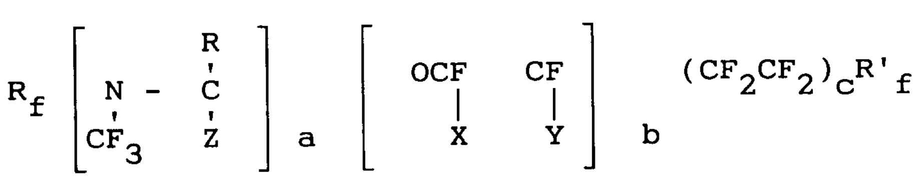

dans laquelle:

$R_f$ et $R'_f$ identiques ou différents les uns des autres, représentent:

$-O-CF_3$;

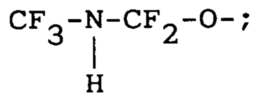

$-CF_2COF$, $-COCF_3$;

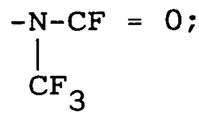

$-CF_2-N=CF_2$; $-CF-N=CF_3$;

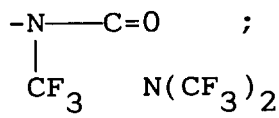 ; 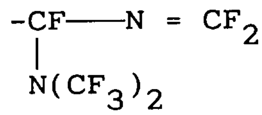 ;

| | |
|---|---|
| | $-C = N - CF_3$; des radicaux perfluoroalkyles en $C_1$ à $C_6$, $N(CF_3)_2$ notamment en $C_1$ à $C_3$; |
| a et b | étant des nombres entiers; et |
| c | étant un nombre entier ou égal à zéro; |

$a+b+c \geqq 2$;
$a/b = 1$;

les motifs précités étant les mêmes ou différents les uns des autres, et étant répartis de façon statistique le long de la chaîne polymère;

Z représente F, ou

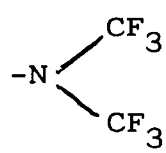

ou un radical perfluoroalkyle en $C_1$ à $C_{10}$, notamment en $C_1$ à $C_5$;

R représente F ou un radical perfluoroalkyle en $C_1$ à $C_{10}$, notamment en $C_1$ à $C_5$, identique ou différent de Z;

X et Y sont définis de la façon suivante:

a) si au moins un des radicaux R et Z est différent de F, dans ce cas X et Y représentent F et $CF_3$, de sorte que si Y = F, X est $CF_3$ et vice-versa, et c = 0, ou X et Y sont tous deux F;

b) si R = Z = F, alors Y représente F et X représente un radical perfluoroalkyle en $C_1$ à $C_5$ et vice-versa, et c = 0, ou X et Y sont tous deux F.

**2.** Procédé de préparation de perfluoroaminoéthers selon la revendication 1, qui consiste à faire réagir au moins une oxaziridine de formule (I):

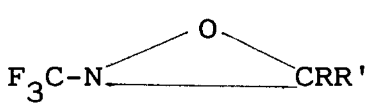

(I)

dans laquelle R représente F ou un radical perfluoroalkyle comprenant de 1 à 10, et R'est F, ou le

groupe:

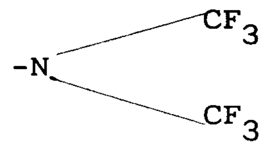

ou un radical perfluoroalkyle comprenant 1 à 10, et notamment 1 à 5, atomes de carbone, avec une perfluorooléfine de formule générale R"FC = $CF_2$, dans laquelle: R" est F ou un radical perfluoroalkyle en $C_1$ à $C_5$ (pour R = R' F), ou avec $CF_2$ = $CF_2$ et/ou $CF_{3CF = CF2}$, à une température de -80 °C à 120 °C, en présence d'un rayonnement ultraviolet dont la longueur d'onde est de 200 à 600 nm.

**3.** Procédé selon la revendication 2, dans lequel la température est de -50 °C à +50 °C.

**4.** Procédé pour préparer des perfluoroaminoéthers selon la revendication 1, qui consiste à faire réagir au moins une oxaziridine de formule (I):

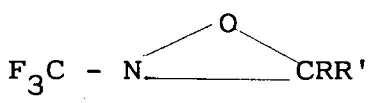 (I)

dans laquelle R et R' ont les mêmes significations que celles données dans la revendication 2, avec au moins une perfluorooléfine de formule générale R"FC = $CF_2$ dans laquelle: R" est F ou un radical perfluoroalkyle en $C_1$ à $C_5$ (pour R = R' = F) ou avec $CF_2$ = $CF_2$ et/ou $CF_3CF$ = $CF_2$, à une température de entre 0 °C à 200 °C, en présence de quantités catalytiques d'un initiateur chimique choisi parmi les composés peroxy et les composés générateurs des radicaux perfluoroalkyle.

**5.** Procédé selon l'une quelconque des revendications 2 à 4, dans lequel l'oxaziridine est séléctionné parmi: 2-(trifluorométhyl)-3,3-difluoro-oxaziridine et 2-(trifluorométhyl)-3-(N,N-bis-trifluorométhylamino)-3-fluoro-oxaziridine.

**6.** Procédé selon la revendication 4 ou 5, dans lequel le composé peroxy est:

$CF_3$ - N(H) $CF_2$ O-O-$CF_3$.

**7.** Procédé selon la revendication 4 ou 5, dans lequel le radical perfluoroalkyle généré contient jusqu'à 6 atomes de carbone.

**8.** Procédé selon la revendication 7, dans lequel le composé générant des radicaux perfluoroalkyle est choisi dans le groupe comprenant:

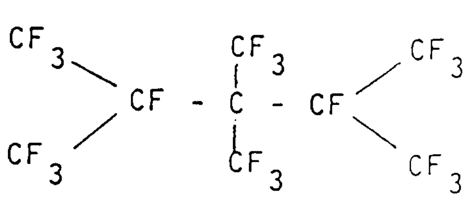 et 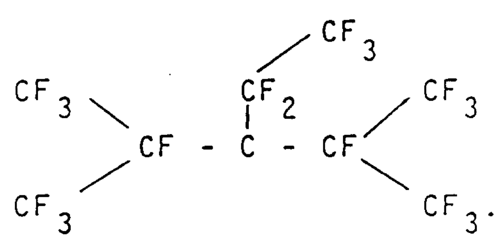

**9.** Procédé selon l'une quelconque des revendications 4 à 8, dans lequel le composé peroxy ou le composé générant des radicaux perfluoroalkyles sont employés en des proportions de 0,5 à 5% en poids, exprimées par rapport au mélange réactionnel.